# EUROPÄISCHE PATENTSCHRIFT

(11) **EP 2 476 800 B1**
(45) Veröffentlichungstag und Bekanntmachung des Hinweises auf die Patenterteilung: **13.11.2013**
(21) Anmeldenummer: 12150181.1
(22) Anmeldetag: 04.01.2012
(51) Int. Cl.: D06N 3/14, C08G 18/10, C08G 18/48, C09D 175/04

(54) **Flächig erstrecktes, flexibles Verbundgebilde mit einer Polyurethan-Oberfläche**
Laminar stretched flexible composite structure with a polyurethane surface
Formation composite souple et étendue à plat, dotée d'une surface en polyuréthane

(30) Priorität: 15.01.2011 DE 102011008677
(43) Veröffentlichungstag der Anmeldung: 18.07.2012
(73) Patentinhaber: Konrad Hornschuch AG, 74679 Weissbach (DE)
(72) Erfinder: Dr. Schlottke Holger, 74629 Pfedelbach (DE); Antabli Sena, 74613 Öhringen (DE)
(74) Vertreter: Wagner, Matthias

(56) Entgegenhaltungen:
- EP-A1- 2 236 662
- EP-B1- 1 059 379
- DE-A1-102006 056 956
- DATABASE WPI Week 198142 Thomson Scientific, London, GB; AN 1981-76758D XP002674114, & JP 56 112579 A (KOHKOKU CHEM IND CO LTD) 4. September 1981 (1981-09-04)

## Beschreibung

### BEREICH DER ERFINDUNG

Die vorliegende Erfindung betrifft ein flächig erstrecktes, flexibles Verbundgebilde mit einer Polyurethan-Oberfläche aufweisend mindestens eine Polyurethanschicht aufbauend auf einem Polyurethan der Formel

-[-O-R^{a}-O-CO-NH-R^{b}-NH-CO-]ₙ- (I)

worin bedeuten:
- -O-R^{a}-O- die Reste mindestens zweier, aliphatischer Polyole mit Hydroxylfunktionalitäten, wobei es sich bei den Polyolen um bifunktionelle und trifunktionelle Polyole handelt,
- R^{b} der Rest eines aliphatischen, isocyanat-terminierten Isocyanat-Polyol-Adduktes,
- n eine ganze Zahl von 1 bis 50 000.

Vorteilhafte Herstellungsverfahren und Verwendungen werden erläutert.

Flächig erstreckte Verbundgebilde sind mit geringer Dicke über eine große Fläche erstreckte Gebilde in Form von Folien, Stoffen, Tüchern, Schichten, Schutzhäuten, Vliesen, Geweben, textilen Bahnen oder Membranen. Diese bestehen aus in dem Gebilde fest miteinander verbundenen Werkstoffen, welche eine Kombination der technischen und physikalischen Eigenschaften der einzelnen Werkstoffkomponenten bereitstellen. Auch flexible Schichtpressstoffe, bei denen durch Kleben oder Kaschieren verbundene Werkstoffe in Sandwichanordnung (z.B. Zeltplanen, Verbundfolien und Laminatfolien) bereitgestellt werden, fallen unter diese Kategorie. Als Trägerstrukturen für flexible Verbundgebilde können beispielsweise flächig erstreckte Stoffe, Textilien oder Gewebebahnen, Vliese oder geschäumte Materialien, z.B. aus PVC, Polyolefin oder Polyurethan, vorgesehen sein.

Insbesondere Kunstleder, bei denen ein Harz und/oder ein Polymer auf einer Trägerstruktur angeordnet und fest mit dieser verbunden ist, sind als gattungsgemäße, mehrschichtige, flexible Verbundgebilde bekannt. Letztere lassen sich analog zu echtem Leder verarbeiten und sind dem natürlichen Leder in Beständigkeit und Farbechtheit sogar überlegen. Im Gegensatz zu echtem Leder erlaubt Kunstleder über das Harz oder Polymer die homogene und durchgängige Verteilung von Stabilisatoren und besonders vorteilhaften Pigmentfarben, welche im Vergleich zu echtem Leder stabilere, lichtechte Farben und deutlich überlegene Beständigkeit gegen Versprödung, Austrocknung und Verschmutzung bereitstellen.

Die Oberfläche eines flexiblen Verbundgebildes umfasst hierbei eine optionale, oberseitige Schutzschicht, eine Deckschicht, eine unterseitige Zwischenschicht, eine rückseitige Klebeschicht und einen textilen Träger.

Die optionale Schutzschicht ist extrem dünn, transparent und erlaubt das Einstellen von Optik und Haptik-.

Die Deckschicht der Oberfläche verleiht dem Verbundgebilde Abrieb- und Stoßfestigkeit und bestimmt das oberflächliche, strukturelle Erscheinungsbild.

Für Kunstleder wird hier häufig eine Leder-typische, hautartige Strukturierung eingebracht, welche auch als Narb-Prägung oder Narbe bezeichnet wird.

Die Zwischenschicht der Oberfläche schließt sich an die Deckschicht an, ist deutlich dicker und stellt mechanische Volumeneigenschaften des Verbundgebildes ein.

Zwischenschicht, Klebeschicht und Träger sind entsprechend der benötigten Festigkeit und Dehnbarkeit dimensioniert und ausgebildet.

Die vorliegende Erfindung ist im Bereich jener flächig erstreckten, flexiblen Verbundgebilde angesiedelt, bei denen die Oberfläche mindestens eine Polyurethanschicht aufweist.

### HINTERGRUND DER ERFINDUNG

Polyurethane sind Polymere, welche durch Verknüpfung von Isocyanat-Gruppen mit Alkoholen entstehen. Hierbei reagiert gemäß nachfolgender Gleichung a):

Rest₁-OH + OCN-Rest₂ = Rest₁-O-CO-NH-Rest₂ Gleichung a)

eine OH-Gruppe mit einer OCN-Isocyanat-Gruppe unter Ausbildung einer Urethan-Bindung -O-CO-NH- . Die Reste Rest₁ und Rest₂ sind dadurch zu einem gemeinsamen, größeren Molekül verknüpft worden.

Weisen nun die Reste gleichfalls OH-Gruppen sowie Isocyanat-Gruppen auf, so kann sich entsprechend Gleichung a) eine immer größer werdende Kette mit einer Vielzahl an Urethanbindungen ― mithin ein Polyurethan ― ausbilden.

Eine äquimolare Mischung aus einem Diol mit zwei OH-Gruppen und einem Diisocyanat mit zwei Isocyanat-Gruppen wird gemäß Gleichung a) theoretisch kontinuierlich anwachsende Polyurethan-Ketten ausbilden, bis keine freien Monomere mehr übrig sind. Damit eine solche Reaktion möglichst gleichmäßig und kontrollierbar abläuft, wird gemäß dem Stand der Technik ein Diol mit endständigen OH-Gruppen verwendet. Endständige OH-Gruppen sind mit maximalem Abstand und frei von dem jeweiligen Rest abstehend angeordnet und ermöglichen in Reaktion mit einem Diisocyanat eine gut kontrollierbare, mittlere Kettenlänge des Polyurethans.

Die Anzahl an OH-Gruppen in einem Polyol wird auch als Funktionalität bezeichnet. Bifunktionelle Polyole weisen formal zwei OH-Gruppen auf und dienen der Kettenverlängerung. Polyole mit höherer Funktionalität weisen mehrere OH-Gruppen auf und können Ketten untereinander verbinden. Solche Polyole werden auch als Quervernetzer bezeichnet, da sie in einer Gruppe von längs erstreckten Ketten Querverbindungen zwischen diesen Ketten aufbauen. Quervernetzte Polyurethane sind durch die raumübergreifende, voluminös vernetzte Struktur stabiler, härter und weniger elastisch.

Die Polyurethanschichten von Verbundgebilden werden
a) als sogenannte High Solids mit einem Festkörpergehalt > 90-100% als noch nicht vollständig ausreagierte Beschichtungsmassen aufgebracht, welche durch Zugabe von Vernetzer unter Temperatur und Zeit zu trockenen Filmen verarbeitet werden
b) als vollständig ausreagierte Beschichtungsmassen aufgebracht. Die Beschichtungsmassen werden als Lösungen oder Dispersionen mit einem Festkörpergehalt von 20 bis 60% in organischen Lösungsmitteln oder wässriger Phase ausgestrichen und unter Verdampfen des Lösungsmittels bzw. Wasser zu trockenen Filmen verarbeitet.

Durch Zugabe von langsam reagierenden polyfunktionellen Quervernetzern können einkomponentige Polyurethane nachvernetzt werden, um die Eigenschaften, wie z.B. die Chemikalienbeständigkeit und die Stabilität zu verbessern. Allerdings werden durch den hohen Anteil an Lösungsmitteln Lösungsmittelreste in der polymeren Struktur eingeschlossen und gasen langsam über längere Zeit aus der Schicht des Verbundgebildes aus. So hergestellte Verbundgebilde erzeugen insbesondere bei direkter Sonneneinstrahlung in geschlossenen Räumen eine stark mit Lösungsmittelresten angereicherte Raumatmosphäre, was sogar als stechender, intensiver Geruch nach 'neuem Kunststoff wahrgenommen werden kann.

Polyurethanschichten aus Prepolymeren und Vernetzern mit geringen Anteilen an organischen Lösungsmitteln (< 5 bis 10%) (sogenannte High Solids) bieten hier den Vorteil, bei schnellerer, direkterer Polymerisation unter Verarbeitungsbedingungen eine Urethanschicht bereitzustellen, die lösemittelarm bis vollständig lösemittelfrei ist. Solche Schichten unterliegen mithin nicht mehr der Problematik einer nennenswerten Ausgasung von Lösemittelresten bei erhöhter Temperatur.

Gattungsgemäße Verbundgebilde sind aus der EP 1 059 379 B1 bekannt und weisen Polyurethanschichten auf, welche aus Polyolen mit endständigen OH-Gruppen und Diisocyanaten aufgebaut sind. Das Ausmaß der Quervernetzung ist durch ein Stoffmengenverhältnis der bi- und trifunktionellen Polyole eingestellt. Die Polyurethanschicht ist dadurch in einem spezifisch vordefinierten Ausmaß quervernetzt.

Ein Nachteil bei den Polyurethanschichten nach dem Stand der Technik ist, dass diese zwar sehr stabil aber leider nicht mehr bleibend thermoplastisch prägbar sind. Eine wärme- und temperaturstabile nachfolgende Strukturierung oder Prägung, welche eine Narbe, Naht, Prägung oder Formung entsprechend eines Leders erlauben würde, ist nicht mehr möglich. Die Quervernetzung bewirkt eine derartige Stabilität, dass die Narbe allein durch Umkehrbeschichtung auf negativ genarbten Trägern hergestellt werden kann.

Dies schränkt die spätere Verwendung eines Verbundgebildes erheblich ein. Das flexible Verbundgebilde muss bereits in der Herstellung mit einer Oberfläche passend zum späteren Einsatzzweck im Rahmen der Beschichtung versehen werden.

### AUSFÜHRLICHE BESCHREIBUNG DER ERFINDUNG

Aufgabe der vorliegenden Erfindung ist es, ein Verbundgebilde bereitzustellen, welches die Nachteile des Standes der Technik überwindet und auch in fertig hergestellter Form thermoplastisch prägbar ist.

Dies führt zu den widersprüchlichen Anforderungen einer erhöhten Stabilität ― welche durch Quervernetzung bereitgestellt werden kann ― und einer thermoplastischen Prägbarkeit ― weiche bei Quervernetzung nicht mehr erreicht werden kann.

Angesichts dieser Problematik findet sich in der DE 10 2006 056 956 die Anweisung, Polyurethan-Schichten aufweisend einen bifunktionellen Alkohol mit endständigen OH-Gruppen und mindestens 5 dazwischen angeordneten C-Atomen einzusetzen. Zusätzlich kann die Menge an ggf. vorhandenem, trifunktionellem Alkohol ― also an Quervernetzer ― weiter abgesenkt ― vorzugsweise auf unter 2% abgesenkt ― werden, ohne dass die Stabilität beeinträchtigt würde.

Demgegenüber schlägt die vorliegende Erfindung eine exakt entgegengesetzt aufgebaute Polyurethanschicht vor, welche trotz Quervernetzung eine thermoplastische Prägbarkeit aufweist. Die beanspruchte Lösung ergibt sich gemäß den Merkmalen des unabhängigen Hauptanspruchs.

Vorteilhafte, weitere Merkmale finden sich in den abhängigen Ansprüchen, der nachfolgenden Beschreibung und den Ausführungsbeispielen. Die nachfolgend erläuterten Merkmalskombinationen sind nicht beschränkend zu sehen. Im Rahmen des unabhängigen Hauptanspruches können zusätzliche, vorteilhafte Merkmale einzeln oder in abweichender Kombination verwirklicht sein, ohne dass der Bereich der Erfindung verlassen würde.

Erfindungsgemäß baut das beanspruchte, flächig erstreckte, flexible Verbundgebilde mit einer Polyurethan-Oberfläche in mindestens einer Polyurethanschicht auf einem Polyurethan der Formel

-[-O-R^{a}-O-CO-NH-R^{b}-NH-CO-]ₙ- (I)

auf, worin bedeuten:
- -O-R^{a}-O- die Reste mindestens zweier, aliphatischer Polyole mit Hydroxylfunktionalitäten, wobei es sich bei den Polyolen um bifunktionelle und trifunktionelle Polyole handelt,
- R^{b} der Rest eines aliphatischen isocyanat-terminierten Isocyanat-Polyol-Adduktes,
- n eine ganze Zahl von 1 bis 50 000.

Die Polyurethanschicht ist ob des Anteils an trifunktionellem Polyol quervernetzt und wird in ihren mechanischen und chemischen Eigenschaften durch das Polyurethan der vorbeschriebenen Art bestimmt. Bevorzugt besteht das Polymer der Polyurethan-Schicht zu über 30 Gewichtsprozent, besonders bevorzugt zu über 75 Gewichtsprozent, aus dem erfindungsgemäßen Polyurethan.

Erfindungsgemäß ist die mindestens eine Polyurethanschicht lösemittelarm, d.h. mit einem Lösungsmittelanteil von unter 1 %, ausgebildet.

Bevorzugt ist die Polyurethanschicht lösemittelfrei ausgebildet, sodass der Anteil an unter Wärme freisetzbaren, flüchtigen, organischen Komponenten mindestens weniger als 50 ppm, bevorzugt 15 bis 30 ppm besonders bevorzugt 20 bis 25 ppm, beträgt.

Erfindungsgemäß beträgt das Stoffmengenverhältnis (bifunktionelle Polyole/trifunktionelle Polyole) (1/5) bis (30/1), bevorzugt (1/1) bis (20/1), besonders bevorzugt (2,5/1) bis (15/1) und der Rest des trifunktionellen Polyols weist eine Struktur entsprechend der Formel (II) 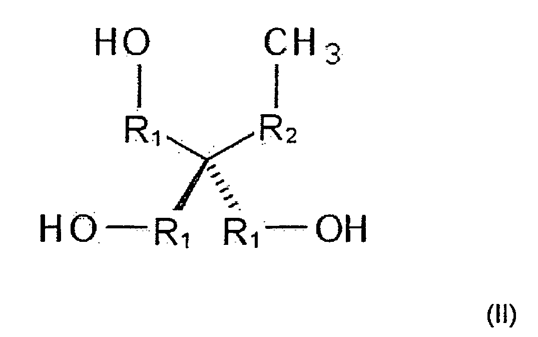 auf. Hierbei bezeichnen
- Reste R₁ unabhängig voneinander einen organischen, aliphatischen Rest mit einer verknüpfenden Kette aus 1 bis 4 C-Atomen,
- Rest R₂ einen organischen, aliphatischen Rest mit einer verknüpfenden Kette aus 1 bis 4 C-Atomen,
und die verknüpfende Kette an C-Atomen des Restes R₂ mindestens so lang ist wie die verknüpfende Kette an C-Atomen einer der Reste R₁.

Formel (II) veranschaulicht, dass die OH-Gruppen nicht allesamt endständig angeordnet sind. Für komplett endständige Anordnung müsste eine der OH-Gruppen an der in Formel (II) oben rechts angeordneten CH₃-Gruppe statt eines H angeordnet sein. Dadurch, dass R₂ mindestens so lang ist, wie einer der Reste R₁, ist ein trifunktionelles Polyol gegeben, bei dem die OH-Gruppen nicht endständig angeordnet sind. Bei besonders kurzen Resten R₁ werden die OH-Gruppen ― wie in Formel (II) veranschaulicht ― den am benachbarten C-Atom angeordneten Rest R₂-CH₃ deutlich wahrnehmen: mindestens eine OH-Gruppe wird stets rückseitig durch diesen Rest sterisch beeinträchtigt und in ihrem struktur-chemischen Verhalten verändert.

Im Rahmen von vergleichenden Testreihen haben die Erfinder festgestellt, dass die beanspruchte Polyurethanschicht, welche aus einem Prepolymer in Form eines aliphatischen isocyanat-terminierten Isocyanat-Polyol-Adduktes, einem bifunktionellen Alkohol und dem in Formel (II) veranschaulichten trifunktionellen Polyol zusammengesetzt ist, überraschender Weise thermoplastische Prägbarkeit und mechanische Stabilität in Kombination bereitstellt.

Die Erfinder gehen davon aus, dass dieser Effekt auf die nicht-endständige Anordnung der Sauerstoff-Gruppen im Rest des trifunktionellen Polyols zurückzuführen ist, wodurch eine abweichende Art der Quervernetzung in überraschender Kombination mit angestrebten Eigenschaften bereitgestellt wird. Dieser Effekt ist bis zu einer Länge von 4 verknüpfenden C-Atomen der Reste R₁ gegeben. Mit einer Kettenlänge von 5 oder mehr ist eine Prägbarkeit nicht mehr ausreichend gegeben, sodass beispielsweise eine Narbe eines Kunstleders nur noch unzureichend thermoplastisch ausgebildet werden kann. Die Erfinder führen dies darauf zurück, dass der relative Unterschied zwischen den OH-Gruppen gemäß Formel (II) ab einer Kettenlänge von 5 oder mehr C-Atomen zu gering ausfällt, um strukturchemisch in der Quervernetzung des Polyurethans wirksam zu sein.

Eine erfindungsgemäß ausgebildete Deckschicht erlaubt das nachträgliche, thermoplastische Ausformen von Feinstrukuren wie zum Beispiel einer Narb-Struktur. Eine erfindungsgemäß ausgebildete Zwischenschicht kann zusätzlich ausgeformt werden. Besonders bevorzugt sind Deckschicht und Zwischenschicht erfindungsgemäß ausgebildet, wodurch eine besonders vielseitig nachstrukturierbare Oberfläche erhalten wird.

Bevorzugt ist die verknüpfende Kette an C-Atomen des Restes R₂ so lang wie die längste, verknüpfende Kette an C-Atomen der gleich oder mindestens zwei verschiedene Längen aufweisenden Ketten der Reste R₁. Bei Polyurethanschichten mit unterschiedlich langen Ketten an verknüpfenden C-Atomen der Reste R₁ konnte eine verbesserte Prägbarkeit festgestellt werden, wenn der Rest R₂ in seiner Kette an verknüpfenden C-Atomen mindestens so lang war, wie die längste Kette an verknüpfenden C-Atomen der Reste R₁. Gleichsinnig zum vorbeschriebenen Erklärungsmodell kann dies auf eine verstärkte, sterische Wechselwirkung der Sauerstoff-Gruppen mit dem Rest R₂-CH₃ zurückgeführt werden.

Bevorzugt ist der Rest R^{b} zu mindestens 80 Stoffmengenprozent der Rest eines Addukts zweier Diisocyanat-Moleküle und eines linearen, bifunktionalen Polyoxyalkyldiols. Ein solcher Prepolymer-Rest bringt in die quervernetzte Struktur Bauelemente ein, welche durch terminierende Isocyanat-Gruppen charakterisiert sind, die über eine längere Kette von [-O- Alkyl-]ₙ- Elementen verbunden sind. Die Erfinder gehen davon aus, dass die negativ polarisierten Sauerstoffbrücken zwischen den Alkylresten eine weniger stark entlang der Ketten kohäsiv verbundene und thermoplastisch besser deformierbare Raumstruktur im quervernetzten Polymer einbringen, was den vorteilhaften, breiter werdenden Temperaturbereich der thermoplastischen Formbarkeit zu erklären vermag.

Besonders bevorzugt ist das Prepolymer zu 85 bis 99 Stoffmengenprozent auf die vorbeschriebene Art aufgebaut. Ab 85, besonders bevorzugt 94 bis 98, Stoffmengenprozent konnte auch bei der thermoplastischen Ausprägung von Grob- und Feinstrukturen eine verbesserte Gleichmäßigkeit in Formtreue und Genauigkeit der Prägung festgestellt werden.

Besonders bevorzugt baut der Rest R^{b} hierbei auf zwei Molekülen eines Diisocyanats auf, welches ausgewählt ist aus der Gruppe bestehend aus HDI, H12MDI und IPDI. IPDI steht für Isophorondiisocyanat, welches durch seine thermische Stabilität bis etwa 160°C, seine Unlöslichkeit in Wasser und durch sein besseres toxikologischen Profil eine deutlich umweltschonendere und einfachere Verarbeitung im Vergleich zu anderen, üblichen Di-Isocyanaten ermöglicht.

Besonders bevorzugt baut der Rest R^{b} weiterhin auf einem Polyol auf, welches zusammengesetzt ist aus mindestens einer Verbindung der Gruppe bestehend aus PEG, PPG, PTHF, Polyether, Polythioether, Polyester, Adipate, Polycaprolactone und Polycarbonate.

Besonders bevorzugt ist in der quervernetzten Polyurethan-Schicht ein PPGbasiertes Polyoxyalkyldiol als verbindendes Element zwischen zwei Diisocyanat-Resten angeordnet. PPG bezeichnet dabei einen vom 1,2 Propandiol abgeleiteten, verknüpfenden Rest, welcher mit einem zusätzlichen Alkylrest ― im Falle des 1,2 Propandiols einer zusätzlichen CH₃-Gruppe ― eine parallele, gleichsinnige Anordnung der Ketten des Prepolymers in der Netzstruktur erschwert; auf diesen Effekt kann der festgestellte, breitere Erweichungsbereich und die beobachtete, einfachere, thermoplastische Formbarkeit zurückgeführt werden.

Bevorzugt ist R^{b} zu höchstens 5 Gewichtsprozent, bevorzugt 0,1 bis 4 Gewichtsprozent, besonders bevorzugt 0,2 bis 1 Gewichtsprozent der Rest eines Isocyanat-terminierten Polyurethan-Oligomers. Ein Oligomer ist ein Nebenprodukt einer Polymerisation und enthält zwischen 10 und 30 Monomere. Eine Polyurethan-Schicht, welche in ihrer quervernetzten Struktur Prepolymer-Reste enthält, kann in ihrer Gleichmäßigkeit durch einen wesentlichen Anteil an Oligomeren erheblich gestört werden, wodurch sich der Anteil an fehlerhaften Bereichen deutlich erhöhen kann. Erst ab einem Oligomer-Gehalt von weniger als 5 Gewichtsprozent wird ein optisch einheitliches Verbundgebilde erhalten, dass keine überdurchschnittlichen Anteile an optisch abweichenden Flächenbereichen mehr aufweist. Unter 4 Gewichtsprozent ist auch bei nachträglicher Thermoformung eine dauerhafte Farbechtheit über das gesamte Verbundgebilde gegeben. Unter 1 Gewichtsprozent Oligomeranteil weisen die Polyurethan-Schichten mit einer solchen Struktur eine deutlich gesteigerte Haftkraft zwischen den Schichten auf: Die Knick- und Faltbeständigkeit der Oberfläche in ihrer Verbindung zum Träger und/oder unterseitigen, haftvermittelnden Klebeschicht ist deutlich gesteigert. Die Erfinder führen dies auf eine deutlich gleichmäßigere, strukturelle Verteilung der einwirkenden Kräfte im Polymernetzwerk zurück.

Bevorzugt ist das Verbundgebilde als Polyurethan-Kunstleder-Rohling ausgebildet. Ein solcher Kunstleder-Rohling weist eine flächige Verbundstruktur mit thermoplastisch prägbarer Oberfläche gemäß der Erfindung auf. Dabei weist die Oberfläche eine ― bevorzugt genarbte ― Deck-Schicht mit einer Dicke von 0,01 bis 0,1 Millimeter und einem Flächengewicht von 10 bis 150 g/m² und eine unterseitig angrenzende Zwischen-Schicht mit einer Dicke von 0,07 bis 1,0 Millimeter bei einem Flächengewicht von 100 bis 1500 g/m² auf. Die Deckschicht kann mit Strukturen im Mikrometerbereich einer Feinstrukturierung unterzogen werden. Ist die Deckschicht durch einen vorstrukturierten Träger bereits mit einer Narb-Struktur versehen worden, so kann der Schritt der Narbung kostensparend entfallen; es werden dann lediglich die für die jeweilige Verwendung zusätzlich benötigten Strukturen im Kunstleder-Rohling ausgeformt. Mit den angegebenen Dicken wird stets ein Kunstleder-Rohling bereitgestellt, welcher in Stabilität und Reißfestigkeit ein gleich dickes Spaltleder übertrifft und ein gleich dickes, ungespaltenes Leder in seinen Eigenschaften verbessert zu ersetzen vermag.

Bevorzugt ist ein genarbtes Polyurethan-Kunstleder, aufweisend eine flächige Verbundstruktur gemäß der Erfindung, unterseitig zur Oberfläche mit mindestens einer aromatischen Haftvermittler-Schicht ausgerüstet. Ein Haftvermittler ist deutlich plastischer und adhäsiver ausgebildet als die Polyurethan-Oberfläche und ermöglicht es, das genarbte Kunstleder auf Unterlagen und Textil zu verankern, deren thermische Ausdehnung erheblich von den Werten des Kunstleders abweicht. Durch lösemittelfreie Ausbildung des Haftvermittlers wird die Menge an bei Wärme flüchtig ausgasenden, organischen Komponenten gering gehalten und eine Erweichung oder Schädigung des unterseitigen Trägers oder der Oberfläche durch Lösungsmittel wird vorteilhaft vollständig vermieden.

Bevorzugt ist ein genarbtes Polyurethan-Kunstleder, aufweisend eine flächige Verbundstruktur gemäß der Erfindung, dadurch gekennzeichnet, dass das Kunstleder unterseitig zur Oberfläche als Träger-Schicht ein textiles Flächengebilde aufweist. Textile Flächengebilde bauen auf Fasern auf, aus denen Gelege, Gewebe, Gewirke oder Vliese flächig hergestellt werden. Auch Kombinationen derselben kommen als textile Flächengebilde in Frage, ebenso Mikrofaservliese, Abstandsgewirke/-vliese oder polyurethanimprägnierte textile Flächengebilde. Die Fasern eines solchen textilen Flächengebildes bieten im Verbund des Flächengebildes eine extrem hohe Außenfläche, über welche eine solche Trägerstruktur äußerst kraftstabil mit der Oberfläche des genarbten Polyurethan-Kunstleders verankert ist. Selbst thermoplastische Prägungen, welche mit hohem Druck und hoher Temperatur ausgeführt werden, führen vorteilhaft zu keiner Schwächung eines so ausgestalteten Verbunds von Oberfläche und Träger. Gleiches gilt für Tiefziehprozesse, bei denen unter Unterdruck bei höheren Temperaturen Verformungen des Materials durchgeführt werden.

Bevorzugt ist ein genarbtes Polyurethan-Kunstleder, aufweisend eine flächige Verbundstruktur gemäß der Erfindung dadurch gekennzeichnet, dass die Verbundstruktur lösemittelfrei ausgebildet ist und einen Gehalt an Monomeren in den erfindungsgemäßen Polyurethan-Schichten von weniger als 0,5 Gewichtsprozent, bevorzugt 0,1 bis 0,01 Gewichtsprozent, besonders bevorzugt 0,03 bis 0,05 Gewichtsprozent, aufweist.

Mit einem Monomer-Gehalt im Promille-Bereich wird selbst in kleinen, geschlossenen Räumen und bei erhöhter Temperatur ― beispielsweise in einem Kraftfahrzeug, welches direkter Sonneneinstrahlung ausgesetzt ist ― ein Gehalt an ausgasenden, flüchtigen, organischen Komponenten von unter 50 ppm erreicht.

Vorteilhaft erleichtert dies auch die Herstellungs- und Verarbeitungseigenschaften des Kunstleders: eine mikroskopische und/oder makroskopische Prägung des genarbten Polyurethan-Kunstleders erfolgt stets bei erhöhter Temperatur. Bei einem Monomer-Gehalt von 0,1 bis 0,01 Gewichtsprozent sind die dabei ausgasenden Rest-Monomere in ihrer Konzentration so niedrig, dass auf aufwändige Absaug-Anlagen oder Luftreinigungs-Maßnahmen verzichtet werden kann. Mit 0,03 bis 0,05 Gewichtsprozent Monomergehalt sind sogar manuelle Prägungen ohne besondere Vorsichtsmaßnahmen möglich.

Bevorzugt ist ein genarbtes Polyurethan-Kunstleder, aufweisend eine flächige Verbundstruktur gemäß der Erfindung, dadurch gekennzeichnet, dass mindestens eine der Schichten einen granulierten Aktivkohle-Zusatz, bevorzugt einen staubfein granulierten Aktivkohlezusatz mit mikroporös strukturierter Oberfläche, aufweist.

Durch die lösemittelarme - bevorzugt lösemittelfreie ― Quervernetzung wird ein Kunstleder mit vorteilhaft niedrigen Werten an noch freisetzbaren, flüchtigen, organischen Verbindungen bereitgestellt. Wird das Kunstleder jedoch zusammen mit vielen weiteren, verschiedenen Kunststoff-Komponenten in einer Baugruppe verbaut ― wie es beispielsweise im KfZ-Bereich üblich ist ― so sind an einigen, stofflichen Übergängen lösemittelhaltige Kleber unverzichtbar. Die Lösemittel sind jedoch schädlich für den Insassen und können, wenn Sie in die Struktur des Kunstleders eindringen, noch nachträglich die Eigenschaften des Kunstleders verschlechtern. Durch einen Aktivkohlezusatz wird ein Filter bereitgestellt, der solche Lösemittel bindet und die Eigenschaften des Leders auch in komplex zusammengesetzten Baugruppen sicherstellt. Dadurch wird sichergestellt, dass ein so ausgerüstetes Kunstleder auch noch in direkter Gegenwart eines lösemittelhaltigen Bauteils keine Schädigung erfährt.

Besonders vorteilhaft ist die Aktivkohle als staubfein granulierter Zusatz mit mikroporös ausgebildeter Oberfläche ausgebildet. Die Mikroporen sind für viskose Mischungen und Beschichtungsmassen zu klein und werden nicht infiltriert. Ein mikroporös ausgestaltetes Aktivkohle-Granulat wird nur für Monomere von Lösungsmitteln und Klebern zugänglich sein. Daher kann ein solches Granulat vorteilhaft bereits in den Beschichtungsmassen gleichmäßig verteilt angeordnet werden und schützt das Kunstleder über die gesamte Oberfläche hinweg gegen eindringende Lösungsmittel und Monomere. Zusätzlich wird dadurch der Gehalt an flüchtigen, organischen Komponenten, welche in der Raumluft enthalten sind, weiter gesenkt, was gerade bei komplex kombiniert verbauten Baugruppen von Vorteil ist.

Bevorzugt ist ein genarbtes Polyurethan-Kunstleder, aufweisend eine flächige Verbundstruktur gemäß der Erfindung dadurch gekennzeichnet, dass die Verbundstruktur Wasserdampf-permeabel, bevorzugt hydrophobiert für Wassergas, gasförmige Lösungsmittel und gasförmige Polymer-Monomere permeabel, ausgebildet ist. Eine für Wasserdampf permeable Oberfläche bietet ein Kunstleder, das ähnlich wie gewachstes und geöltes Leder atmungsaktiv aber dennoch wässrige Flüssigkeiten nicht aufsaugend ausgebildet ist. Um die Schmutz abweisende Wirkung zu verstärken, wird vorteilhaft die Oberfläche zusätzlich ausgerüstet. Besonders vorteilhaft kann die Oberfläche mit einem Trockenmittel, bevorzugt einem Silikat, besonders bevorzugt einem Zeolithen, ausgerüstet werden, um Wasserdampf reversibel aufnehmen und abgeben zu können. Besonders bevorzugt wird diese Ausrüstung mit der vorbeschriebenen Aktivkohleausrüstung mit hydrophober Mikroporosität kombiniert, wodurch ein atmungsaktives Kunstleder bereitgestellt wird, welches sogar bei lokaler Belastung mit Wasserdampf in der Lage ist, über die hydrophobe, mikroporöse Aktivkohle flüchtige, organische Komponenten auszufiltern.

### AUSFÜHRUNGSBEISPIELE

Nachfolgend wird das erfindungsgemäße Verbundgebilde am Beispiel eines genarbten Polyurethan-Kunstleders mit einer aliphatischen Deckschicht erläutert. Das Verbundgebilde weist folgende Struktur auf:
Schutz-Schicht:
   - optionaler Lack auf Basis eines aliphatischen Polyurethans als Schutzschicht
Oberfläche:
   - aliphatische PUR-Deck-Schicht auf Basis einer lösemittelarmen oder -freien reaktiven Streichmasse
Zwischenschicht:
   - aromatische oder aliphatische PUR-Zwischen-Schicht auf Basis einer lösemittel-armen oder -freien reaktiven Streichmasse
Haftvermittler-Schicht:
   - PUR-Klebeschicht auf Basis wässriger oder lösemittelhaltiger (ggf. reaktiver) Streichmassen
Träger-Schicht:
   - textiles Flächengebilde

### BEISPIEL 1

| **Rohstoff** | **Teile** | **Beschreibung / Einsatzzweck** | **chemische Basis** |
|---|---|---|---|
| bifunktionelles Polyol | 5,16 | Kettenverlängerer | Alkohol |
| Trifunktionelles Polyol | 1,29 | Quervernetzer | Alkohol |
| Katalysator | 0,25 | Beschleunigt die Vernetzung | Sn |
| Isocyanat-Polyol-Addukt | 93,54 | aliphatisches Prepolymer | Diisocyanat + Polypropylendiol |
| Farbe schwarz | 15,0 | Pigmentzubereitung | oxidisch/C |
| Polyalkylsiloxan | 0,10 | Entschäumer | Polydimethylsiloxan |
| Gerüstsilikat | 2,50 | Trockenmittel | Zeolith |
| Oxid/Metall/Reduktionsmittel | 1,00 | Stabilisatoren-Gemisch | HALS/UVA/ Antioxidant |
| Si-basiertes Tensid | 2,00 | Verlaufshilfsmittel | Polyether-polysiloxan |

Die Rohstoffe veranschaulichen beispielhaft mögliche Verbindungen des jeweiligen Einsatzzwecks.

Das aliphatische Prepolymer besteht zu über 90% aus einem isocyanat-terminierten Polyol-Addukt auf Basis eines Diisocynats und einem Polypropylendiol mit einer Molmasse im Bereich 800 bis 2000 g/mol. Der Gehalt an freiem Isocyanat-Monomer beträgt weniger 1%, der Gehalt an oligomeren Isocyanaten unter 4%. Das Prepolymer war aufgrund seiner speziellen Zusammensetzung deutlich dünnflüssiger als übliche Prepolymere mit höherem Gehalt an Oligomeren/Monomeren. Weiterhin wurden keine zusätzlichen Lösungsmittel benötigt, um hinsichtlich der Viskosität in einen passenden Verarbeitungsbereich zu gelangen. Der Verzicht auf Lösungsmittel ermöglicht die vorbeschriebene, vorteilhafte Absenkung flüchtiger, organischer Verbindungen, welche im englischen Sprachraum auch als VOC abgekürzt werden.

Der niedrige Monomergehalt war dabei auch arbeitshygienisch von Vorteil, da monomere Bestandteile aufgrund ihres niedrigen Molekulargewichts flüchtig sind und potentiell eingeatmet werden könnten; vorliegend konnte das Gemisch ohne besondere Absaug- oder Reinigungsanlagen direkt verarbeitet werden.

In verschiedenen Variationen wurden der obigen Rezeptur weiterhin übliche Zusätze wie Flammschutzmittel und Füllstoffe zugegeben, um die prozentualen Grenzen der Zusammensetzung näher zu bestimmen. Wie bei Farbe, Entschäumer, Verlaufshilfsmittel, Stabilisator und Trockenmittel sind diese Zusätze ggf. von Vorteil, im Grundsatz aber optional. Der Vernetzungsgrad (Äquivalentverhältnis NCO/OH, Kennzahl) wurde bevorzugt stöchiometrisch eingestellt, konnte jedoch innerhalb eines Bereichs von 0,8 ― 1,3 variiert werden.

Ausführungsbeispiel erläutert an Hand eines Herstellverfahrens:
Zur Herstellung der PUR-Deckschicht wurden alle Rohstoffe bis auf die isocyanathaltige Komponente zunächst gemischt, homogenisiert und entlüftet. Vorteilhafter Weise findet hierzu ein Dissolver Verwendung. Die Vermischung von Harzmischung mit der isocyanathaltigen Komponente geschah erst unmittelbar vor der Verarbeitung, vorteilhaft mittels einer Zwei-Komponenten-Dosieranlage.

Ein Dissolver bietet den Vorteil, dass Partikelagglomerate aufgebrochen und darin/daran gebundene Monomere/Lösungsmittel wirksam der Entlüftung unterworfen werden.

Eine Zwei-Komponenten-Dosieranlage stellt eine frisch zubereitete Reaktivmasse bereit, welche trotz des zugefügten Katalysators noch ausreichend lange verarbeitbar ist. Die Vermischung der zwei Komponenten erfolgt mit Hilfe eines statischen oder dynamischen Mischers, über den die zwei Komponenten vor dem Streichen vermischt werden.

Das Rezepturgemisch wurde im Umkehrstreichverfahren über ein Rakel auf ein geeignetes Trennpapier aufgetragen. Abhängig vom Substrat, Beschichtungsviskosität und/oder der Beschichtungsstärke wurden passende Rakel- und Coater-Beschichtungssysteme ausgewählt.

Als Untergrund konnten neben Papierbahnen auch andere, übliche Materialien, die endlos gemacht wurden, erfolgreich verwendet wie z.B. Folien, silikonisierte oder teflonisierte textile Flächengebilde oder Stahlbänder.

Die Trocknung der gestrichenen Filme erfolgte über einen dem Auftragswerk nachgeschalteten Trockenofen bei erhöhter Temperatur zwischen 120°C und 160°C. Die erhaltenen Filme wiesen Gewichte von weniger als 50g/m² auf; die Materialdicke lag unterhalb von 0,04mm.

Auf die getrocknete Deckschicht wurde eine Polyurethan-Zwischenschicht aufgetragen. Mischung, Auftragsverfahren und Trocknung waren analog zu der der Deckstrichmasse. Die aufgetragenen Zwischenschichten wiesen Gewichte von um die 350g/m² auf; die Materialdicke betrug um die 0,28 mm.

Auf die getrocknete Zwischen-Schicht wurde eine einkomponentige, lösemittelfreie Polyurethan-Klebeschicht aufgetragen. Auftragsverfahren und Trocknung waren analog zu der Zwischenstrichmasse, wobei ein textiles Flächengebilde in die nasse Klebeschicht eingelegt wurde.

Vorteilhafter Weise wurde die Klebeschicht mit staubfein granulierter Aktivkohle angemischt. Durch die partikuläre Beimischung konnte die Viskosität der Klebeschicht gezielt eingestellt werden, sodass das Textil mit kontrollierter Tiefe in die Klebeschicht einsank, bevor diese thixotrop erstarrte und nachfolgend aushärtete. Auch über die Viskosität der Klebeschicht, Kaschierdruck und Trocknungsbedingungen konnte das Einsinkverhalten des Textils erfolgreich geregelt werden.

Die erhaltenen Klebe-Schichten wiesen Gewichte von ca. 40g/m² auf.

Als textile Flächengebilde konnten Gelege, Gewebe, Gewirke, Vliese, auch Kombinationen hiervon (Piqué-Vlies), Mikrofaservliese, Abstandsgewirke/-vliese sowie polyurethanimprägnierte textile Flächengebilde erfolgreich verwendet werden.

Gesamtdicke und Gesamtgewicht des Komplettaufbaus waren dabei stark abhängig vom verwendeten Textil.

Nach vollständiger Trocknung des Komplettaufbaus konnte dieser vom Träger/Papier abgezogen werden.

Abschließende Arbeitsgänge hierzu waren Lackieren, Prägen sowie optional ein Lackieren der Kuppe nach dem Prägen. Anstelle oder zusätzlich zum Lackieren wurde auch ein Vorlackieren des Papiers vor dem Auftragen der Deckschicht durchgeführt.

Das erfindungsgemäß beanspruchte Verbundgebilde erwies sich hierbei als erstaunlich anpassbar und vielseitig ausgestaltbar, ohne dass dabei die Prägbarkeit der Polyurethanschicht beeinträchtigt worden wäre.

Schichtdicken und Auflagen:

| | Schichtdicke | Auflage |
|---|---|---|
| | (mm) | (g/m²) |
| Deckschicht | 0,01-0,1 | 10-150 |
| Zwischenschicht | 0,07-1,0 | 100-1500 |
| Klebeschicht | 0,01-0,1 | 10-80 |
| Textil | variiert | variiert |

Sowohl Fein- als auch Grobstrukturierungen konnten mit üblichen Maßnahmen mit gutem bis sehr gutem Ergebnis durchgeführt werden, ohne dass die mechanischen Eigenschaften des Kunstleders beeinträchtigt waren.

Das so in verschiedenen Variationen hergestellte, genarbte Kunstleder wurde auf folgende Eigenschaften untersucht:
- Prägbarkeit
- Narbstabilität
- Kratz- und Abrieb-Festigkeit
- Emission an VOC
- Emission an Monomeren
- Knickbeständigkeit

Im Detail:

| Prüfmerkmal | Prüfvorschrift Bedingungen | Vorgabe | Prüfung / Ergebnis |
|---|---|---|---|
| Wärmelagerung | DBL 5306 21 Tagebei 120°C | keine Narb-, Glanz-Farbänderung | erfüllt |
| Heißlichtechtheit | DIN 75202 | Stufe 7-8 keine Narb-, Glanz-Farbänderung | erfüllt |
| Heißlichtalterung | DIN 75202 | 4-5, keine Narb-, Glanz-Farbänderung | erfüllt |
| Kratzfestigkeit kü nstl. Fingernagel | DBL 5306.3.1 | keine dauerhafte Beschädigung | Erfüllt; teilweise schwache Schreibneigung durch Textureffekt |
| VOC | VDA 278 | Emission <50 ppm | erfüllt mit Aktivkohle oder sauberem Täger |
| FOG | VDA 278 | Emission <50 ppm | erfüllt mit Aktivkohle oder sauberem Täger |
| Faltbean-spruchung | DIN 53351 100.000 Zyklen/23°C | Keine Risse | erfüllt |
| Faltbean-spruchung | DIN 53351 30.000 Zyklen/-10°C | Keine Risse | erfüllt |

Bei der Überprüfung der Emissionen nach VOC/FOG zeigte sich, dass in einem Verbundgebilde alle Komponenten zu berücksichtigen sind. Teilweise wurden über den textilen Träger Lösemittel/Monomere freigesetzt, welche wahrscheinlich auf die Ausrüstung des textilen Trägers zurückzuführen waren. Bei hoch reinen Trägermaterialien oder in Kombination mit zugesetzter, granulierter Aktivkohle konnten Emissionswerte von weniger als 50 ppm zuverlässig eingehalten werden.

In vorteilhafter Ausführungsform umfasst das vorliegend beanspruchte Verbundgebilde mithin ein:
genarbtes Polyurethan-Kunstleder, aufweisend eine flächige Verbundstruktur, wobei
   das Kunstleder als Verbundgebilde aus Schichten aufgebaut ist, bestehend aus
   - einer oberseitigen, optionalen, aliphatischen Polyurethan-Schutz-Schicht,
   - einer aliphatischen Oberfläche, bestehend aus
      - einer aliphatischen, lösemittelfreien Deck-Schicht
         - mit einer Dicke von 0,04 ± 0,02 mm,
         - mit einem Flächengewicht von (40 ±20) g/m²,
   - einer Polyurethan-Zwischen-Schicht
      - mit einer Dicke von (0,4 ± 0,2) mm,
      - mit einem Flächengewicht von (300 ± 100) g/m²,
   - einer haftvermitteinden PU-Klebeschicht
      - mit einer Dicke von (0,04 ± 0,02) mm,
      - mit einem Flächengewicht von (40 ± 20) g/m²,
   - einer textilen Träger-Schicht,
   insbesondere Gewebe, Gewirke, Vliese, Kombinationen der vorgenannten und/oder polyurethan-imprägnierte Schichten der vorgenannten Art,
   wobei
   die Oberfläche als genarbte, thermoplastisch prägbare, lösemittelfreie Doppelschicht mindestens eine Polyurethanschicht aufbauend auf einem Polyurethan der Formel

   -[-O-R^{a}-O-CO-NH-R^{b}-NH-CO-]ₙ- (I)

   umfasst, worin bedeuten:
   - -O-R^{a}-O- die Reste eines bifunktionellen Polyols (Molekulargewicht < 500) und eines trifunktionellen Polyols (Molekulargewicht < 500),
   - R^{b} der Rest eines 98% reinen Prepolymers in Form eines isocyanat-terminierten Adduktes aus je einem Polypropylendiol und zwei aliphatischen Diisocyanat-Molekülen mit eineeinem Molekulargewicht von 800 - 2000 g/mol,
   - n eine ganze Zahl von 1 bis 50 000,
wobei das Molverhältnis bifunktionelles Polyol/trifunktionelles Polyol (1/5) bis (30/1), bevorzugt (1/1) bis (20/1), besonders bevorzugt (2,5/1) bis (15/1), beträgt
wobei der Vernetzungsgrad der Polyurethanschicht als Verhältniswert (NCO:OH) 0,8 bis 1,3 beträgt,
die mindestens eine Polyurethanschicht bestehend aus
3 bis 40 Gewichtsanteilen an bifunktionellem und trifunktionellem Polyol,
60 bis 95 Gewichtsanteile Prepolymer,
bis zu 50 Gewichtsanteile Pigmentfarbstoffe,
bis zu 50 Gewichtsanteile Füllstoffe,
bis zu 10 Gewichtsanteile unvermeidliche Rückstände und übliche Zusätze wie Katalysatoren, Entschäumer, Trockenmittel, Stabilisatoren und Verlaufshilfsmittel.

## Patentansprüche

1. Flächig erstrecktes flexibles Verbundgebilde mit einer Polyurethan-Oberfläche, die Polyurethan-Oberfläche aufweisend mindestens eine Polyurethanschicht aufbauend auf einem Polyurethan der Formel
-[-O-R^{a}-O-CO-NH-R^{b}-NH-CO-]ₙ- (I)
worin bedeuten:
- -O-R^{a}-O- die Reste mindestens zweier, aliphatischer Polyole mit Hydroxylfunktionalitäten, wobei es sich bei den Polyolen um bifunktionelle und trifunktionelle Polyole handelt,
- R^{b} der Rest eines aliphatischen isocyanat-terminierten Isocyanat-Polyol-Adduktes,
- n eine ganze Zahl von 1 bis 50 000,
**dadurch gekennzeichnet,**
**dass** die mindestens eine Polyurethanschicht lösemittelarm, bevorzugt lösemittelfrei, ausgebildet ist,
**dass** das Stoffmengenverhältnis (bifunktionelle Polyoleltrifunktionelle Polyole) (1/5) bis (30/1), bevorzugt (1/1) bis (20/1), besonders bevorzugt (2,5/1) bis (15/1) beträgt und
**dass** der Rest des trifunktionellen Polyols eine Struktur entsprechend der Formel (II) 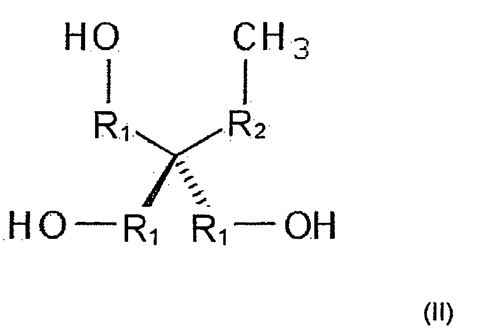 aufweist,
worin
- Reste R₁ unabhängig voneinander einen organischen, aliphatischen Rest mit einer verknüpfenden Kette aus 1 bis 4 C-Atomen bezeichnen,
- Rest R₂ einen organischen, aliphatischen Rest mit einer verknüpfenden Kette aus 1 bis 4 C-Atomen bezeichnet und
- die verknüpfende Kette an C-Atomen des Restes R₂ mindestens so lang ist wie die verknüpfende Kette an C-Atomen einer der Reste R₁.

2. Verbundgebilde nach dem vorhergehenden Anspruch, **dadurch gekennzeichnet, dass** die verknüpfende Kette an C-Atomen des Restes R₂ mindestens so lang ist wie die längste, verknüpfende Kette an C-Atomen der mindestens zwei verschiedene Längen aufweisenden, verknüpfenden Ketten aus C-Atomen der Reste R₁.

3. Verbundgebilde nach einem der vorhergehenden Ansprüche, **dadurch gekennzeichnet, dass** R^{b} zu mindestens 80 Stoffmengenprozent, bevorzugt 85 bis 99 Stoffmengenprozent, besonders bevorzugt 94 bis 98 Stoffmengenprozent, der Rest eines Addukts zweier Diisocyanat-Moleküle, bevorzugt zweier Moleküle eines IPDI-basierten Diisocyanats, und einem linearen, bifunktionellen Polyoxyalkyldiol, bevorzugt einem PPG-basierten Polyoxyalkyldiol, ist.

4. Verbundgebilde nach einem der vorhergehenden Ansprüche, **dadurch gekennzeichnet, dass** R^{b} zu höchstens 5 Gewichtsprozent, bevorzugt 0,1 bis 4 Gewichtsprozent, besonders bevorzugt 0,2 bis 1 Gewichtsprozent der Rest eines Isocyanat-terminierten Polyurethan-Oligomers ist.

5. Polyurethan-Kunstleder-Rohling, aufweisend eine flächige Verbundstruktur mit thermoplastisch prägbarer Oberfläche gemäß einem der vorhergehenden Ansprüche, **dadurch gekennzeichnet, dass** die Oberfläche eine - bevorzugt genarbte - Deck-Schicht mit einer Dicke von 0,01 bis 0,1 Millimeter und einem Flächengewicht von 10 bis 150 g/m² und eine unterseitig angrenzende Zwischen-Schicht mit einer Dicke von 0,07 bis 1,0 Millimeter bei einem Flächengewicht von 100 bis 1500 g/m² aufweist.

6. Genarbtes Polyurethan-Kunstleder, aufweisend eine flächige Verbundstruktur gemäß einem der vorhergehenden Ansprüche, **dadurch gekennzeichnet, dass** das Kunstleder unterseitig zur Oberfläche mindestens eine Haftvermittler-Schicht aufweist.

7. Genarbtes Polyurethan-Kunstleder, aufweisend eine flächige Verbundstruktur gemäß einem der vorhergehenden Ansprüche, **dadurch gekennzeichnet, dass** das Kunstleder unterseitig zur Oberfläche als Träger-Schicht ein textiles Flächengebilde aufweist.

8. Genarbtes Polyurethan-Kunstleder, aufweisend eine flächige Verbundstruktur gemäß einem der vorhergehenden Ansprüche, **dadurch gekennzeichnet, dass** die Verbundstruktur lösemittelfrei ausgebildet ist und einen Gehalt an Monomeren in den Polyurethan-Schichten von weniger als 0,5 Gewichtsprozent, bevorzugt 0,1 bis 0,01 Gewichtsprozent, besonders bevorzugt 0,03 bis 0,05 Gewichtsprozent, aufweist.

9. Genarbtes Polyurethan-Kunstleder, aufweisend eine flächige Verbundstruktur nach einem der vorhergehenden Ansprüche, **dadurch gekennzeichnet, dass** mindestens eine der Schichten einen granulierten Aktivkohle-Zusatz, bevorzugt einen staubfein granulierten Aktivkohle-zusatz mit mikroporös strukturierter Oberfläche, aufweist.

10. Genarbtes Polyurethan-Kunstleder, aufweisend eine flächige Verbundstruktur nach einem der vorhergehenden Ansprüche, **dadurch gekennzeichnet, dass** die Verbundstruktur wasserdampf-permeabel, bevorzugt hydrophobiert für Wassergas, gasförmige Lösungsmittel und gasförmige Polymer-Monomere permeabel, ausgebildet ist.

11. Genarbtes Polyurethan-Kunstleder, aufweisend eine flächige Verbundstruktur nach einem der vorhergehenden Ansprüche, wobei
das Kunstleder als Verbundgebilde aus Schichten aufgebaut ist, bestehend aus
- einer oberseitigen, optionalen, aliphatischen Polyurethan-SchutzSchicht,
- einer aliphatischen Oberfläche, bestehend aus
- einer aliphatischen, lösemittelfreien Deck-Schicht
- mit einer Dicke von 0,04 ± 0,02 mm,
- mit einem Flächengewicht von (40 ± 20) g/m²,
- einer Polyurethan-Zwischen-Schicht
- mit einer Dicke von (0,4 ± 0,2) mm,
- mit einem Flächengewicht von (300 ± 100) g/m²,
- einer lösemittelfreien haftvermittelnden PU-Klebeschicht
- mit einer Dicke von (0,04 ± 0,02) mm,
- mit einem Flächengewicht von (40 ± 20) g/m²,
- einer textilen Träger-Schicht,
insbesondere Gewebe, Gewirke, Vlies, Kombinationen der vorgenannten und/oder polyurethan-imprägnierte Schichten der vorgenannten Art,
wobei
die Oberfläche als genarbte, thermoplastisch prägbare, lösemittelfreie Doppelschicht mindestens eine Polyurethanschicht aufbauend auf einem Polyurethan der Formel
-[-O-R^{a}-O-CO-NH-R^{b}-NH-CO-]ₙ- (I)
umfasst, worin bedeuten:
- -O-R^{a}-O- die Reste eines bifunktionellen Polyols (Molekulargewicht < 500) und eines trifunktionellen Polyols (Molekulargewicht < 500),
- R^{b} der Rest eines 98% reinen Prepolymers in Form eines isocyanat-terminierten Adduktes aus je einem Polypropylendiol und zwei aliphatischen Diisocyanat-Molekülen mit einem Molekulargewicht von 800 - 2000 g/mol,
- n eine ganze Zahl von 1 bis 50 000,
wobei das Molverhältnis bifunktionelles Polyol/trifunktionelles Polyol (1/5) bis (30/1), bevorzugt (1/1) bis (20/1), besonders bevorzugt (2,5/1) bis (15/1), beträgt
wobei der Vernetzungsgrad der Polyurethanschicht als Verhältniswert (NCO:OH) 0,8 bis 1,3 beträgt,
die mindestens eine Polyurethanschicht bestehend aus 3 bis 40 Gewichtsanteilen an bifunktionellem und trifunktionellem Polyol, 60 bis 95 Gewichtsanteile Prepolymer,
bis zu 50 Gewichtsanteile Pigmentfarbstoffe,
bis zu 50 Gewichtsanteile Füllstoffe,
bis zu 10 Gewichtsanteile unvermeidliche Rückstände und übliche Zusätze wie Katalysatoren, Entschäumer, Trockenmittel, Stabilisatoren und Verlaufshilfsmittel.

## Claims

1. Laminar stretched flexible composite structure with a polyurethane surface, the polyurethane surface having at least one polyurethane layer based on a polyurethane of the formula
-[-O-R^{a}-O-CO-NH-R^{b}-NH-CO-]ₙ⁻ (I)
wherein:
- -O-R^{a}-O- signifies the radicals of at least two aliphatic polyols with hydroxy functionalities, wherein the polyols are bifunctional and trifunctional polyols,
- R^{b} signifies the radical of an aliphatic isocyanate-terminated isocyanate polyol adduct,
- n is an integer from 1 to 50,000,
**characterised in that** the at least one polyurethane layer is low-solvent, preferably solvent-free, **in that** the substance quantity ratio (bifunctional polyols/trifunctional polyols) is (1/5) to (30/1), preferably (1/1) to (20/1), particularly preferably (2.5/1) to (15/1) and **in that** the radical of the trifunctional polyol has a structure corresponding to the formula (II) 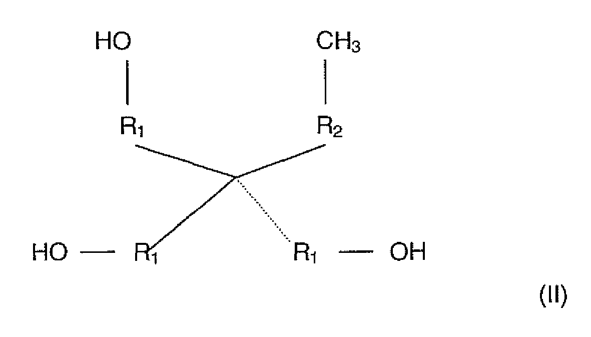 wherein
- radicals R₁, independently of one another, designate an organic, aliphatic radical with a linking chain of 1 to 4 carbon atoms,
- radical R₂ designates an organic, aliphatic radical with a linking chain of 1 to 4 carbon atoms and
- the linking chain of carbon atoms of the radical R₂ is at least as long as the linking chain of carbon atoms of one of the radicals R₁.

2. Composite structure according to the preceding claim, **characterised in that** the linking chain of carbon atoms of the radical R₂ is at least as long as the longest linking chain of carbon atoms of the linking chains of carbon atoms of the radicals R₁, which chains have at least two different lengths.

3. Composite structure according to any one of the preceding claims, **characterised in that** R^{b} is at least 80 per cent by amount of substance, preferably 85 to 99 per cent by amount of substance, particularly preferably 94 to 98 per cent by amount of substance, the radical of an adduct of two diisocyanate molecules, preferably two molecules of an IPDI-based diisocyanate, and a linear, bifunctional polyoxyalkyldiol, preferably a PPG-based polyoxyalkyldiol.

4. Composite structure according to any one of the preceding claims, **characterised in that** R^{b} is at most 5 per cent by weight, preferably 0.1 to 4 per cent by weight, particularly preferably 0.2 to 1 per cent by weight, the radical of an isocyanate-terminated polyurethane oligomer.

5. Polyurethane synthetic leather blank, having a laminar composite structure with a thermoplastically embossable surface according to any one of the preceding claims, **characterised in that** the surface has a - preferably grained - cover layer with a thickness of 0.01 to 0.1 millimetres and a weight per unit area of 10 to 150 g/m² and an intermediate layer adjoining on the lower side with a thickness of 0.07 to 1.0 millimetres at a weight per unit area of 100 to 1,500 g/m².

6. Grained polyurethane synthetic leather, having a planar composite structure according to any one of the preceding claims, **characterised in that** the synthetic leather, on the lower side with respect to the surface, has at least one adhesion promoter layer.

7. Grained polyurethane synthetic leather, having a planar composite structure according to any one of the preceding claims, **characterised in that** the synthetic leather, on the lower side with respect to the surface, has a textile fabric as a carrier layer.

8. Grained polyurethane synthetic leather, having a planar composite structure according to any one of the preceding claims, **characterised in that** the composite structure is solvent-free and has a monomer content in the polyurethane layers of less than 0.5 per cent by weight, preferably 0.1 to 0.01 per cent by weight, particularly preferably 0.03 to 0.05 per cent by weight.

9. Grained polyurethane synthetic leather, having a planar composite structure according to any one of the preceding claims, **characterised in that** at least one of the layers has a granulated activated carbon addition, preferably an activated carbon addition granulated to a fine dust, with a microporous structured surface.

10. Grained polyurethane synthetic leather, having a planar composite structure according to any one of the preceding claims, **characterised in that** the composite structure is steam-permeable, preferably made hydrophobic with respect to water gas and gaseous solvents and permeable with respect to gaseous polymer-monomers.

11. Grained polyurethane synthetic leather, having a planar composite structure according to any one of the preceding claims, wherein the synthetic leather is constructed as a composite structure made of layers, consisting of
- an upper-side, optional, aliphatic polyurethane protective layer,
- an aliphatic surface, consisting of
- an aliphatic, solvent-free cover layer
- with a thickness of 0.04 ± 0.02 mm,
- with a weight per unit area of (40 ± 20) g/m²
- a polyurethane intermediate layer
- with a thickness of (0.4 ± 0.2) mm,
- with a weight per unit area of (300 ± 100) g/m²,
- a solvent-free adhesion promoting polyurethane adhesive layer
- with a thickness of (0.04 ± 0.02) mm,
- with a weight per unit area of (40 ± 20) g/m²,
- a textile carrier layer,
in particular woven fabrics, knitted fabrics, nonwovens, combinations of the aforementioned and/or polyurethane-impregnated layers of the aforementioned type,
wherein the surface, as a grained, thermoplastically embossable, solvent-free double layer, comprises at least one polyurethane layer based on a polyurethane of the formula
-[-O-R^{a}-O-CO-NH-R^{b}-NH-CO-]ₙ⁻ (I)
wherein:
- -O-R^{a}-O- signifies the radicals of a bifunctional polyol (molecular weight < 500) and a trifunctional polyol (molecular weight < 500),
- R^{b} signifies the radical of a 98% pure prepolymer in the form of an isocyanate-terminated adduct made, in each case, of a polypropylene diol and two aliphatic diisocyanate molecules with a molecular weight of 800 - 2,000 g/mol,
- n signifies an integer from 1 to 50,000,
wherein the molar ratio of bifunctional polyol/trifunctional polyol is (1/5) to (30/1), preferably (1/1) to (20/1), particularly preferably (2.5/1) to (15/1), wherein the degree of cross-linking of the polyurethane layer as the ratio value (NCO:OH) is 0.8 to 1.3, the at least one polyurethane layer consisting of 3 to 40 weight fractions of bifunctional and trifunctional polyol, 60 to 95 weight fractions of prepolymer, up to 50 weight fractions of pigment dyes, up to 50 weight fractions of fillers, up to 10 weight fractions of unavoidable residues and conventional additives such as catalysts, defoaming agents, drying agents, stabilisers and auxiliary levelling agents.

## Revendications

1. Formation composite souple et étendue à plat, dotée d'une surface en polyuréthane, la surface en polyuréthane présentant au moins une couche de polyuréthane basée sur un polyuréthane de la formule
-[-O-R^{a}-O-CO-NH-R^{b}-NH-CO-]ₙ- (I)
dans laquelle
- -O-R^{a}-O- représente les radicaux d'au moins deux polyols aliphatiques avec des fonctionnalités hydroxyle, où les polyols sont des polyols bifonctionnels et trifonctionnels,
- R^{b} est le radical d'un adduit de polyol-isocyanate à terminaison isocyanate aliphatique,
- n est un nombre entier de 1 à 50 000,
**caractérisée en ce que**
ladite au moins une couche de polyuréthane est pauvre en solvant, de préférence exempte de solvant,
le rapport de quantités de matière (polyols bifonctionnels/polyols trifonctionnels) vaut (1/5) à (30/1), de préférence (1/1) à (20/1), et de préférence encore (2,5/1) à (15/1), et
le radical du polyol trifonctionnel présente une structure correspondant à la formule (II) 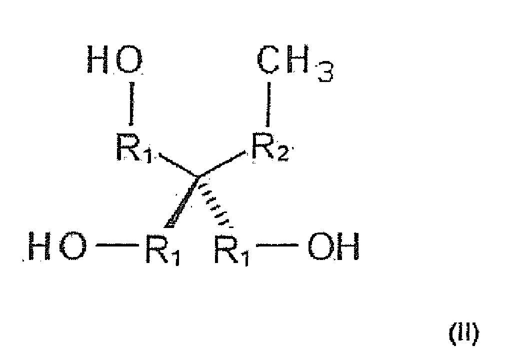 dans laquelle
- les radicaux R₁ désignent indépendamment l'un de l'autre un radical organique aliphatique avec une chaîne de liaison de 1 à 4 atomes de C,
- le radical R₂ désigne un radical organique aliphatique avec une chaîne de liaison de 1 à 4 atomes de C, et
- la chaîne de liaison en atomes de C du radical R₂ est au moins aussi longue que la chaîne de liaison en atomes de C des radicaux R₁.

2. Formation composite selon la revendication précédente, **caractérisée en ce que** la chaîne de liaison en atomes de C du radical R₂ est au moins aussi longue que la plus longue chaîne de liaison en atomes de C des chaînes de liaison en atomes de C présentant au moins deux longueurs différentes des radicaux R₁.

3. Formation composite selon l'une quelconque des revendications précédentes, **caractérisée en ce que** R^{b} est à au moins 80 pour cent de quantité de matière, de préférence 85 à 99 pour cent de quantité de matière, de préférence encore 94 à 98 pour cent de quantité de matière, le radical d'un adduit de deux molécules de diisocyanate, de préférence de deux molécules d'un diisocyanate à base IPDI, et d'un polyoxyalkyldiol bifonctionnel linéaire, de préférence d'un polyoxyalkyldiol à base PPG.

4. Formation composite selon l'une quelconque des revendications précédentes, **caractérisé en ce que** R^{b} est au plus à 5 pour cent en poids, de préférence de 0,1 à 4 pour cent en poids, de préférence encore de 0,2 à 1 pour cent en poids, le radical d'un oligomère de polyuréthane à terminaison isocyanate.

5. Ebauche de polyuréthane et similicuir, comportant une structure composite plate avec une surface pouvant être gaufrée de façon thermoplastique selon l'une quelconque des revendications précédentes, **caractérisée en ce que** la surface présente une couche de recouvrement - de préférence grainée - avec une épaisseur de 0,01 à 0,1 millimètre et un grammage de 10 à 150 g/m² et une couche intermédiaire sous-jacente avec une épaisseur de 0,07 à 1,0 millimètre pour un grammage de 100 à 1500 g/m².

6. Similicuir-polyuréthane grainé, présentant une structure composite plate selon l'une quelconque des revendications précédentes, **caractérisé en ce que** le similicuir présente, sur le côté inférieur à la surface, au moins une couche d'agent d'accrochage.

7. Similicuir-polyuréthane grainé, présentant une structure composite plate selon l'une quelconque des revendications précédentes, **caractérisé en ce que** le similicuir présente, sur le côté inférieur à la surface, une formation plate textile comme couche de support.

8. Similicuir-polyuréthane grainé, présentant une structure composite plate selon l'une quelconque des revendications précédentes, **caractérisé en ce que** la structure composite est réalisée sans solvant et présente une teneur en monomères dans les couches de polyuréthane de moins de 0,5 pour cent en poids, de préférence de 0,1 à 0,01 pour cent en poids, et de préférence encore de 0,03 à 0,05 pour cent en poids.

9. Similicuir-polyuréthane grainé, présentant une structure composite plate selon l'une quelconque des revendications précédentes, **caractérisé en ce qu'**au moins une des couches présente un ajout de charbon actif granulé, de préférence un ajout de charbon actif granulé en poudre fine avec une surface à structure microporeuse.

10. Similicuir-polyuréthane grainé, présentant une structure composite plate selon l'une quelconque des revendications précédentes, **caractérisé en ce que** la structure composite est perméable à la vapeur d'eau, de préférence hydrophobe à l'égard du gaz à l'eau, perméable aux solvants gazeux et aux polymères- monomères gazeux.

11. Similicuir-polyuréthane grainé, présentant une structure composite plate selon l'une quelconque des revendications précédentes, dans lequel le similicuir est une formation composite composée de couches, se composant de
- une couche aliphatique supérieure de protection de polyuréthane, en option,
- une surface aliphatique, se composant de
- une couche de recouvrement aliphatique sans solvant,
- avec une épaisseur de (0,04±0,02) mm,
- avec un grammage de (40±20) g/m²,
- une couche intermédiaire de polyuréthane,
- avec une épaisseur de (0,4±0,2) mm,
- avec un grammage de (300±100) g/m²,
- une couche adhésive de PU d'accrochage sans solvant,
- avec une épaisseur de (0,04 ± 0,02) mm,
- avec un grammage de (40 ± 20) g/m²,
- une couche de support textile.
en particulier un tissu, un tricot, un non tissé, des combinaisons des couches précitées et/ou imprégnées de polyuréthane du type précité,
dans lequel
la surface, comme double couche grainée sans solvant, pouvant être gaufrée de façon thermoplastique, comprend au moins une couche de polyuréthane basée sur un polyuréthane de la formule
-[-O-R^{a}-O-CO-NH-R^{b}-NH-CO-]ₙ- (I)
dans laquelle:
- -O-R^{a}-O- désigne les radicaux d'un polyol bifonctionnel (poids moléculaire < 500) et d'un polyol trifonctionnel (poids moléculaire > 500),
- R^{b} désigne le radical d'un prépolymère pur à 98 % sous la forme d'un adduit à terminaison isocyanate de chaque fois un polypropylène diol et deux molécules de diisocyanate aliphatiques avec un poids moléculaire de 800 - 2000 g/mole,
- n est un nombre entier de 1 à 50 000,
dans lequel le rapport molaire polyol bifonctionnel/polyol trifonctionnel vaut (1/5) à (30/1), de préférence (1/1) à (20/1), de préférence encore (2,5/1) à (15/1),
dans lequel le degré de réticulation de la couche de polyuréthane comme valeur du rapport (NCO:OH) vaut 0,8 à 1,3,
ladite au moins une couche de polyuréthanne se composant de:
3 à 40 parties en poids de polyol bifonctionnel et trifionctionnel,
60 à 95 parties en poids de prépolymère,
jusqu'à 50 parties en poids de colorants pigmentaires,
jusqu'à 50 parties en poids de substances de charge,
jusqu'à 10 parties en poids de résidus inévitables et d'ajouts usuels comme des catalyseurs, des agents anti-mousse, des produits siccatifs, des stabilisants et des auxiliaires d'écoulement.
